# EUROPÄISCHE PATENTANMELDUNG

(11) **EP 4 318 756 A2**
(43) Veröffentlichungstag der Anmeldung: **07.02.2024**
(21) Anmeldenummer: 23188977.5
(22) Anmeldetag: 01.08.2023
(51) Int. Cl.: H01M 50/209, H01M 50/249

(54) **ENERGIESPEICHERVORRICHTUNG FÜR EIN ELEKTRISCH ANGETRIEBENES KRAFTFAHRZEUG**

(30) Priorität: 04.08.2022 DE 102022119605
(71) Anmelder: MAN Truck & Bus SE, 80995 München (DE)
(72) Erfinder: Wilke, Florian, 80995 München (DE); Kratzer, Sebastian, 80995 München (DE)
(74) Vertreter: v. Bezold & Partner Patentanwälte - PartG mbB

(57) **Zusammenfassung**

Die Erfindung betrifft eine Energiespeichervorrichtung (10) für ein elektrisch angetriebenes Kraftfahrzeug. Ein erstes Stützelement (18) ist zwischen einem Ende (20) einer Versteifungsstrebe (16) und einem Batteriegehäuse (14) angeordnet.

Das erstes Stützelement (18) stützt die Versteifungsstrebe (16) an dem Batteriegehäuse (14) abstützt, wobei sich ein Querschnitt des ersten Stützelements (18) von dem Ende (20) der Versteifungsstrebe (16) hin zu dem Batteriegehäuse (14) vergrößert.

Ein zweites Stützelement (26) ist zwischen einer Batteriezellenstapel-Endseite (13) und dem Batteriegehäuse (14) angeordnet. Das zweite Stützelement (26) stützt den Batteriezellenstapel (12) am Batteriegehäuse (14) ab, wobei sich ein Querschnitt des zweiten Stützelements (26) von der Batteriezellenstapel-Endseite (13) hin zu dem Batteriegehäuse (14) verkleinert.

## Beschreibung

Die Erfindung betrifft eine Energiespeichervorrichtung für ein elektrisch angetriebenes Kraftfahrzeug.

Aus der Praxis bekannte Fahrzeugbatterien, wie sie z. B. als Energiespeicher bzw. als Traktionsbatterie in Hybridfahrzeugen oder Elektrofahrzeugen zum Einsatz kommen, verfügen typischerweise über einen modularen Aufbau, werden also durch mehrere verbundene Batteriemodule gebildet. Jedes Batteriemodul umfasst dabei mehrere stapelartig angeordnete Batterie-Speicherzellen. Die verbundenen Batteriemodule werden, bspw. zum Schutz vor äußeren Beschädigungen in einer Unfallsituation, mit einem Gehäuse umgeben.

Zur Erhöhung der Energiedichte sowie zur Verringerung der Teileanzahl und des Gewichts der Fahrzeugbatterie kann die sogenannte "Cell-to-Pack"-Technologie in der Praxis Anwendung finden. Dabei werden die einzelnen Batteriezellen ohne vorherige Zusammenfassung zu Batteriemodulen direkt in das Batteriegehäuse integriert.

Alterungsbedingt können sich die einzelnen Batteriezellen des Batteriezellenstapels über die Lebensdauer ausdehnen (sog. "Zell-Swelling"), was sich nachteilig auf deren Lebensdauer auswirken kann. Um die Batteriezellen in das Batteriegehäuse zu integrieren und um dieser alterungsbedingten Ausdehnung durch Aufnahme der sich aufgrund der Ausdehnung der Batteriezellen im Batteriezellenstapel einstellenden Kräfte entgegenwirken zu können, werden in bekannten Lösungen Spann- oder Klemmelemente verwendet.

US 2021/0296745 A beschreibt das Einsetzen zweier sich verjüngender Elemente in einen Zwischenraum zwischen einen Batteriekörper und ein Batteriegehäuse zur Verspannung des Batteriekörpers.

Bei diesen bekannten Lösungen kann sich diese Verspannung des Batteriezellenstapels im Batteriegehäuse oder im Batteriemodul insbesondere im Crashfall auch nachteilig auswirken, da von außen auf die Energiespeichervorrichtung wirkende Kräfte über die Spann- oder Klemmelemente an den Batteriezellenstapel weitergeleitet werden. In Unfallsituationen kann der Batteriezellenstapel dadurch beschädigt werden.

Die Aufgabe der vorliegenden Erfindung ist es, eine Technik zur Aufnahme eines Batteriezellenstapels im Batteriegehäuse bereitzustellen, mit der Nachteile bekannter Ansätze vermieden werden können. Die Aufgabe der Erfindung ist es insbesondere, bekannte Energiespeichervorrichtungen hinsichtlich der Crashsicherheit zu verbessern.

Diese Aufgaben werden durch Vorrichtungen und Verfahren mit den Merkmalen des unabhängigen Anspruchs gelöst. Vorteilhafte Weiterbildungen sind in den abhängigen Ansprüchen und der Beschreibung angegeben.

Ein Grundgedanke der Erfindung besteht darin, zwischen dem Batteriezellenstapel und dem Batteriegehäuse ein erstes Stützelement vorzusehen, dessen größere Fläche das Batteriegehäuse abstützt bzw. in dieses übergeht und dessen kleinere Fläche eine Versteifungsstrebe der Energiespeichervorrichtung abstützt bzw. in diese übergeht. Weiterhin ist zwischen dem Batteriezellenstapel und dem Batteriegehäuse ein zweites Stützelement vorgesehen, dessen kleinere Fläche das Batteriegehäuse und dessen größere Fläche den Batteriezellenstapel abstützt bzw. in diese übergeht.

Ein Aspekt betrifft eine Energiespeichervorrichtung zur Speicherung elektrischer Energie für ein elektrisch angetriebenes Kraftfahrzeug.

Die Energiespeichervorrichtung weist einen Batteriezellenstapel, ein Batteriegehäuse und eine Versteifungsstrebe auf. Das Batteriegehäuse nimmt den Batteriezellenstapel auf. Die Versteifungsstrebe verläuft (z. B. parallel zu dem Batteriezellenstapel, vorzugsweise parallel zu einer Stapelrichtung des Batteriezellenstapels) durch das Batteriegehäuse.

Die Energiespeichervorrichtung weist ferner eine Stützvorrichtung auf. Die Stützvorrichtung weist ein erstes Stützelement und ein zweites Stützelement auf.

Das erste Stützelement ist zwischen einem Ende der Versteifungsstrebe und dem Batteriegehäuse angeordnet.

Das erste Stützelement stützt die Versteifungsstrebe an dem Batteriegehäuse ab. Ein Querschnitt des ersten Stützelements vergrößert sich (z. B. keilförmig) von dem Ende der Versteifungsstrebe hin zu dem Batteriegehäuse.

Das zweite Stützelement ist zwischen einer Batteriezellenstapel-Endseite und dem Batteriegehäuse angeordnet. Das zweite Stützelement stützt den Batteriezellenstapel am Batteriegehäuse ab. Ein Querschnitt des zweiten Stützelements verkleinert sich (z. B. keilförmig) von der Batteriezellenstapel-Endseite hin zu dem Batteriegehäuse.

Ein Vorteil der Erfindung kann darin liegen, dass mittels des ersten Stützelements im Crashfall von außen auf die Energiespeichervorrichtung einwirkende Kräfte großflächig aufgenommen und am Batteriezellenstapel vorbei auf die Versteifungsstrebe geleitet werden. Dadurch können Beschädigungen des Batteriezellenstapels im Crashfall vermieden oder gemindert werden. Gleichzeitig können mittels des zweiten Stützelements Swelling-Kräfte, die sich z. B. aufgrund einer alterungsbedingten Ausdehnung der Batteriezellen im Batteriezellenstapel einstellen, großflächig aufgenommen, am Batteriegehäuse abgestützt und der Ausdehnung des Batteriezellenstapels damit entgegengewirkt werden. Dies kann die Lebensdauer der Batteriezellen steigern.

Die Energiespeichervorrichtung kann in an sich bekannter Weise dazu ausgebildet sein, elektrische Energie zu speichern, die in entsprechenden Antriebskomponenten des Kraftfahrzeugs, z. B. in einer E-Maschine, in Antriebsenergie gewandelt werden kann. Anders ausgedrückt kann die Energiespeichervorrichtung zur temporären Aufnahme von Traktionsenergie ausgebildet sein. Die Energiespeichervorrichtung kann auch als Traktionsbatterie bezeichnet werden.

Der Batteriezellenstapel kann eine Mehrzahl von in einer Stapelrichtung stapelartig hintereinander angeordneten Speicherzellen (z. B. Pouch-Speicherzellen oder prismatische Speicherzellen) umfassen. Die Batteriezellenstapel-Endseite kann beispielsweise eine Stirnfläche des Batteriezellenstapels, vorzugsweise in der Stapelrichtung gesehen, sein

In einer Ausführungsform kann das erste Stützelement eine erste Fläche und eine (z. B. entgegengesetzte) zweite Fläche aufweisen. Die erste Fläche kann eine erste Querschnittsfläche sein, an der das erste Stützelement in das Batteriegehäuse (z. B. integral-einstückig) übergeht. Alternativ dazu kann die erste Fläche eine erste Anlagefläche sein, an der das erste Stützelement an dem Batteriegehäuse abgestützt ist. Die zweite Fläche kann eine zweite Querschnittsfläche sein, an der das erste Stützelement in das Ende der Versteifungsstrebe (z. B. integral-einstückig) übergeht. Alternativ dazu kann die zweite Fläche eine zweite Anlagefläche sein, an der das erste Stützelement an dem Ende der Versteifungsstrebe abgestützt ist.

Alternativ oder zusätzlich kann das zweite Stützelement eine erste Fläche und eine (z. B. entgegengesetzte) zweite Fläche aufweisen. Die erste Fläche kann eine erste Querschnittsfläche sein, an der das zweite Stützelement in das Batteriegehäuse (z. B. integral-einstückig) übergeht. Alternativ dazu kann die erste Fläche eine erste Anlagefläche sein, an der das zweite Stützelement an dem Batteriegehäuse abgestützt ist. Die zweite Fläche kann eine zweite Querschnittsfläche sein, an der das zweite Stützelement in die Batteriezellenstapel-Endseite übergeht (z. B. integral-einstückig in eine Lastverteilerplatte oder einen Rahmen an der Batteriezellenstapel-Endseite). Alternativ dazu kann die zweite Fläche eine zweite Anlagefläche sein, an der das zweite Stützelement an der Batteriezellenstapel-Endseite abgestützt ist.

Vorzugsweise kann die erste Anlagefläche des ersten Stützelements und/oder die erste Anlagefläche des zweiten Stützelements am Batteriegehäuse vollflächig anliegend abgestützt sein. Es ist aber auch denkbar, dass die erste Anlagefläche des ersten Stützelements und/oder die erste Anlagefläche des zweiten Stützelements nur mittelbar am Batteriegehäuse abgestützt ist (z. B. mit einer dazwischen angeordneten Komponente). Analog dazu kann die zweite Anlagefläche des ersten Stützelements vollflächig anliegend an der Versteifungsstrebe abgestützt sein. Es ist aber auch denkbar, dass die zweite Anlagefläche des ersten Stützelements nur mittelbar an der Versteifungsstrebe abgestützt ist (z. B. mit einer dazwischen angeordneten Komponente). Analog dazu kann die zweite Anlagefläche des zweiten Stützelements vollflächig anliegend an der Batteriezellenstapel-Endseite abgestützt sein. Es ist aber auch denkbar, dass die zweite Anlagefläche des zweiten Stützelements nur mittelbar an der Batteriezellenstapel-Endseite abgestützt ist (z. B. mit einer dazwischen angeordneten Komponente). Die Versteifungsstrebe kann bspw. entlang einer Längsaußenseite des Batteriezellenstapels durch das Batteriegehäuse verlaufen.

Es ist denkbar, dass das erste Stützelement, bspw. aufgrund seiner Formgebung und/oder aufgrund seines Materials, eine höhere Steifigkeit aufweist als das zweite Stützelement.

In einer Ausführungsform kann die erste Fläche des ersten Stützelements größer sein als die zweite Fläche des ersten Stützelements. Ferner kann die erste Fläche des zweiten Stützelements kleiner sein als die zweite Fläche des zweiten Stützelements.

In einer Ausführungsform kann das erste Stützelement eine keilförmige, spitz zulaufende oder sich verjüngende Außenkontur aufweisen, die sich zwischen der ersten Fläche und der zweiten Fläche erstreckt. Alternativ oder zusätzlich kann das zweite Stützelement eine keilförmige, spitz zulaufende oder sich verjüngende Außenkontur aufweisen, die sich zwischen der zweiten Fläche und der ersten Fläche erstreckt. Beispielsweise können sich die vorgenannten Außenkonturen jeweils von der ersten Fläche bis hin zu der zweiten Fläche erstrecken. Dadurch können Spannungserhöhungen in den Stützelementen, bspw. aufgrund einer Kerbwirkung, vermieden werden.

In einer Ausführungsform kann das erste Stützelement einen prismatischen Körper mit einem trapezförmigen Querschnitt aufweisen. Die erste Fläche kann eine Grundseite (z. B. eine Basis) des trapezförmigen Querschnitts und die zweite Fläche kann eine der Grundseite entgegengesetzte weitere Grundseite des trapezförmigen Querschnitts sein. Der trapezförmige Querschnitt kann gleichschenklig sein. Es ist aber auch denkbar, dass die Schenkel des trapezförmigen Querschnitts ungleiche Längen aufweisen.

Alternativ oder zusätzlich kann das zweite Stützelement einen prismatischen Körper mit einem trapezförmigen Querschnitt aufweisen. Die erste Fläche kann eine Grundseite (z. B. eine Basis) des trapezförmigen Querschnitts und die zweite Fläche kann eine der Grundseite entgegengesetzte weitere Grundseite des trapezförmigen Querschnitts sein. Der trapezförmige Querschnitt kann gleichschenklig sein. Es ist aber auch denkbar, dass die Schenkel des trapezförmigen Querschnitts ungleiche Längen aufweisen.

In einer Ausführungsform kann die erste Fläche des ersten Stützelements planparallel zu (z. B. in einer Ebene mit) der ersten Fläche des zweiten Stützelements angeordnet sein. Alternativ oder zusätzlich kann die zweite Fläche des ersten Stützelements planparallel zu (z. B. in einer Ebene mit) der zweiten Fläche des zweiten Stützelements angeordnet sein.

Es ist auch denkbar, dass das erste Stützelement einen prismatischen Grundkörper mit einem trapezförmigen Querschnitt aufweist und das zweite Stützelement einen prismatischen Grundkörper mit einem trapezförmigen Querschnitt aufweist, wobei das erste Stützelement und das zweite Stützelement derart (z. B. direkt) verbunden sind, dass die verbundenen Grundkörper einen prismatischen Körper mit einem trapezförmigen Querschnitt (z. B. mit einem parallelogrammförmigen Querschnitt) aufweisen.

Alternativ oder zusätzlich können das erste Stützelement und das zweite Stützelement einen im Wesentlichen gleichen Keilwinkel aufweisen. Unter dem Keilwinkel kann bspw. ein Winkel verstanden werden, der durch gedachte Verlängerungen der Schenkel eines trapezförmigen Querschnitts eingeschlossen wird.

Denkbar ist, dass das erste Stützelement und das zweite Stützelement ineinander verschränkt sind und/oder ineinandergreifen.

In einer Ausführungsform kann die erste Fläche des ersten Stützelements (z. B. mindestens zweifach oder mindestens dreifach oder mindestens vierfach) größer sein als die erste Fläche des zweiten Stützelements. Dadurch wird eine Aufnahme von Kräften, die im Crashfall von außen auf die Energiespeichervorrichtung einwirken, durch das zweite Stützelement, vorteilhaft reduziert.

Alternativ oder zusätzlich kann die zweite Fläche des zweiten Stützelements (z. B. mindestens zweifach oder mindestens dreifach oder mindestens vierfach) größer sein als die zweite Fläche des ersten Stützelements.

Alternativ oder zusätzlich kann die erste Fläche des ersten Stützelements mindestens zweifach (z. B. mindestens dreifach oder mindestens vierfach) größer sein als die zweite Fläche des ersten Stützelements. Dies kann in einer Unfallsituation zu einer besonders großflächigen Aufnahme der von außen auf die Energiespeichervorrichtung wirkenden Kräfte durch das erste Stützelement führen.

Alternativ oder zusätzlich kann die zweite Fläche des zweiten Stützelements mindestens zweifach (z. B. mindestens dreifach oder mindestens vierfach) größer sein als die erste Fläche des zweiten Stützelements. Dadurch können die Swelling-Kräfte durch das zweite Stützelement besonders großflächig aufgenommen werden.

In einer Ausführungsform kann das erste Stützelement eine Außenkontur aufweisen, die sich zwischen der ersten Fläche und der zweiten Fläche erstreckt. Das zweite Stützelement kann eine der Außenkontur gegenüberliegende, formkorrespondierende Außenkontur aufweisen. Die Außenkontur des ersten Stützelements und die Außenkontur des zweiten Stützelements können mechanisch voneinander entkoppelt und/oder zueinander beabstandet sein. Beispielsweise kann die Energiespeichervorrichtung zwischen der Außenkontur des ersten Stützelements und der Außenkontur des zweiten Stützelements einen Luftspalt aufweisen. Die Außenkontur des ersten Stützelements kann eine Außenfläche eines Schenkels eines trapezförmigen Querschnitts des ersten Stützelements sein. Die Außenkontur des zweiten Stützelements kann eine Außenfläche eines Schenkels eines trapezförmigen Querschnitts des zweiten Stützelements sein. Vorteilhaft kann eine Weiterleitung von Swelling-Kräften von dem zweiten Stützelement an das erste Stützelement und von Crash-Kräften von dem ersten Stützelement an das zweite Stützelement vermieden werden.

Grundsätzlich ist aber auch denkbar, dass das erste Stützelement eine dritte Fläche und das zweite Stützelement eine dritte Fläche aufweist, wobei die dritte Fläche des ersten Stützelements an der dritten Fläche des zweiten Stützelements abgestützt ist und/oder völlflächig anliegt und/oder befestigt ist.

In einer Ausführungsform kann die zweite Fläche des ersten Stützelements nicht an der Batteriezellenstapel-Endseite abgestützt sein. Alternativ oder zusätzlich kann die zweite Fläche des zweiten Stützelements nicht an der Versteifungsstrebe abgestützt sein. Dies kann den Vorteil bergen, dass Swelling Kräfte nicht an das erste Stützelement und Crash-Kräfte nicht an das zweite Stützelement weitergeleitet werden.

In einer Ausführungsform kann das erste Stützelement einstückig integral mit dem Batteriegehäuse und der Versteifungsstrebe verbunden sein. Alternativ dazu kann das erste Stützelement ein zu dem Batteriegehäuse und der Versteifungsstrebe separates Bauteil sein.

Denkbar ist, dass das erste Stützelement und/oder das zweite Stützelement formschlüssig (z. B. mittels einer Nut-Feder-Verbindung) und/oder kraftschlüssig (z. B. mittels einer Verschraubung) und/oder stoffschlüssig (z. B. mittels Verschweißen oder Verkleben) am Batteriegehäuse befestigt ist. Denkbar ist ferner, dass das erste Stützelement formschlüssig (z. B. mittels einer Nut-Feder-Verbindung) und/oder kraftschlüssig (z. B. mittels einer Verschraubung) und/oder stoffschlüssig (z. B. mittels Verschweißen oder Verkleben) an der Versteifungsstrebe befestigt ist.

In einer Ausführungsform kann das erste Stützelement ein härteres Material und/oder eine geringere Verformbarkeit und/oder eine höhere Steifigkeit aufweisen als das zweite Stützelement. Alternativ oder zusätzlich kann das erste Stützelement ein metallisches Material umfassen und das zweite Stützelement ein Kunststoffmaterial umfassen. Dies kann bewirken, dass das zweite Stützelement im Crashfall als eine Art Intrusionsvolumen und/oder Knautschvolumen deformiert wird, was eine Weiterleitung von Kräften an den Batteriezellenstapel mindern kann.

In einer Ausführungsform kann die Energiespeichervorrichtung eine Verteilerplatte (z. B. ein Lastverteilerblech) aufweisen. Die Verteilerplatte kann zwischen der zweiten Fläche des zweiten Stützelements und der Batteriezellenstapel-Endseite angeordnet sein. Dies kann zu einer Reduzierung der Flächenpressung an der Batteriezellenstapel-Endseite und damit der Beanspruchung des Batteriezellenstapels führen.

In einer Ausführungsform kann das erste Stützelement und/oder das zweite Stützelement eine geringere Wärmeleitfähigkeit aufweisen als das Batteriegehäuse. Alternativ oder zusätzlich kann das erste Stützelement und/oder das zweite Stützelement den Batteriezellenstapel von dem Batteriegehäuse thermisch isolieren. Beispielsweise kann durch das erste Stützelement und/oder das zweite Stützelement eine wärmedämmende Wirkung erzielt werden. Das erste Stützelement und/oder das zweite Stützelement kann damit in einer Art Doppelfunktion zusätzlich der thermischen Isolierung der Energiespeichervorrichtung dienen.

In einer Ausführungsform kann sich eine Höhe des ersten Stützelements über mindestens 50% einer Höhe der Batteriezellenstapel-Endseite (z. B. über eine Gesamthöhe der Batteriezellenstapel-Endseite) oder über 50% einer Höhe des Endes der Versteifungsstrebe (z. B. über eine Gesamthöhe des Endes der Versteifungsstrebe) erstrecken. Alternativ oder zusätzlich kann sich eine Höhe des zweiten Stützelements über mindestens 50% einer Höhe der Batteriezellenstapel-Endseite (z. B. über eine Gesamthöhe der Batteriezellenstapel-Endseite) erstrecken. Dadurch können die Flächenpressungen und die Spannungen im ersten Stützelement und/oder im zweiten Stützelement reduziert werden.

In einer Ausführungsform kann die Energiespeichervorrichtung einen weiteren Batteriezellenstapel aufweisen, der in dem Batteriegehäuse aufgenommen und benachbart (z. B. parallel) zu dem Batteriezellenstapel angeordnet ist. Die Versteifungsstrebe kann zwischen dem Batteriezellenstapel und dem weiteren Batteriezellenstapel angeordnet sein. Die Stützvorrichtung kann ein drittes Stützelement aufweisen, das zwischen einer Batteriezellenstapel-Endseite des weiteren Batteriezellenstapels und dem Batteriegehäuse angeordnet ist und den weiteren Batteriezellenstapel am Batteriegehäuse abstützt, wobei sich ein Querschnitt des dritten Stützelements von der Batteriezellenstapel-Endseite hin zu dem Batteriegehäuse (z. B. keilförmig) verkleinert.

In einer Ausführungsform kann das zweite Stützelement und das dritte Stützelement einen Raum (z. B. einen prismatischen Raum mit einem trapezförmigen Querschnitt) aufspannen, in dem das erste Stützelement angeordnet ist. Beispielsweise kann der aufgespannte Raum einer Außenkontur des ersten Stützelements entsprechen.

Vorzugsweise können das erste Stützelement in einen Zwischenraum zwischen dem zweiten Stützelement und dem dritten Stützelement eingreifen bzw. verschränkt mit dem zweiten und dritten Stützelement sein.

In einer weiteren Ausführungsform kann das dritte Stützelement eine erste Fläche und eine zweite Fläche aufweisen. Die erste Fläche kann eine erste Querschnittsfläche sein, an der das dritte Stützelement in das Batteriegehäuse (z. B. integral-einstückig) übergeht. Alternativ kann die erste Fläche eine erste Anlagefläche sein, an der das dritte Stützelement an dem Batteriegehäuse abgestützt ist. Die zweite Fläche kann eine zweite Querschnittsfläche sein, an der das dritte Stützelement in die Batteriezellenstapel-Endseite (z. B. integral-einstückig in eine Lastverteilerplatte an der Batteriezellenstapel-Endseite) übergeht. Alternativ kann die zweite Fläche eine zweite Anlagefläche sein, an der das dritte Stützelement an der Batteriezellenstapel-Endseite des weiteren Batteriezellenstapels abgestützt ist. Die erste Fläche kann kleiner sein als die zweite Fläche.

Bevorzugt kann das dritte Stützelement die gleichen Merkmale aufweisen wie das zweite Stützelement. Beispielsweise können das zweite und dritte Stützelement Gleichteile sein.

Das erste Stützelement und das zweite Stützelement und optional das dritte Stützelement können bevorzugt direkt nebeneinander angeordnet sein.

In einer Ausführungsform kann die Energiespeichervorrichtung eine weitere Stützvorrichtung aufweisen. Die weitere Stützvorrichtung kann ein erstes Stützelement und ein zweites Stützelement aufweisen. Das erste Stützelement kann zwischen einem dem Ende entgegengesetzten weiteren Ende der Versteifungsstrebe angeordnet sein und eine erste Fläche und eine zweite Fläche aufweisen.

Das erste Stützelement der weiteren Stützvorrichtung kann die Versteifungsstrebe an dem Batteriegehäuse abstützten. Ein Querschnitt des ersten Stützelements kann sich von dem weiteren Ende der Versteifungsstrebe hin zu dem Batteriegehäuse vergrößern.

Das zweite Stützelement der weiteren Stützvorrichtung kann den Batteriezellenstapel an dem Batteriegehäuse abstützen. Ein Querschnitt des zweiten Stützelements kann sich von der weiteren Batteriezellenstapel-Endseite hin zu dem Batteriegehäuse verkleinern.

Das erste Stützelement der weiteren Stützvorrichtung kann eine erste Fläche und eine zweite Fläche aufweisen. Die erste Fläche kann eine erste Querschnittsfläche sein, an der das erste Stützelement in das Batteriegehäuse (z. B. integral-einstückig) übergeht. Alternativ kann die erste Fläche eine erste Anlagefläche sein, an der das erste Stützelement an dem Batteriegehäuse abgestützt ist. Die zweite Fläche kann eine zweite Querschnittsfläche sein, an der das erste Stützelement in das weitere Ende der Versteifungsstrebe (z. B. integral-einstückig) übergeht. Alternativ kann die zweite Fläche eine zweite Anlagefläche sein, an der das erste Stützelement an dem Batteriegehäuse abgestützt ist.

Alternativ oder zusätzlich kann das zweite Stützelement der weiteren Stützvorrichtung eine erste Fläche und eine zweite Fläche aufweisen. Die erste Fläche kann eine erste Querschnittsfläche sein, an der das zweite Stützelement in das Batteriegehäuse (z. B. integral-einstückig) übergeht. Alternativ dazu kann die erste Fläche eine erste Anlagefläche sein, an der das zweite Stützelement an dem Batteriegehäuse abgestützt ist. Die zweite Fläche kann eine zweite Querschnittsfläche sein, an der das zweite Stützelement in die weitere Batteriezellenstapel-Endseite (z. B. integral-einstückig in eine Lastverteilerplatte an der weiteren Batteriezellenstapel-Endseite) übergeht. Alternativ kann die zweite Fläche eine zweite Anlagefläche sein, an der das zweite Stützelement an dem Batteriegehäuse abgestützt ist.

In anderen Worten kann die Energiespeichervorrichtung auf entgegengesetzten Stirnflächen des Batteriezellenstapels die Stützvorrichtung und die weitere Stützvorrichtung aufweisen. Dies kann zu einer symmetrischen Spannungsverteilung führen. Ferner kann der Batteriezellestapel damit von beiden entgegengesetzten Seiten vor Beschädigungen im Crashfall geschützt werden.

In einer Ausführungsform kann in Bezug auf die weitere Stützvorrichtung mindestens eines der nachfolgenden Merkmale erfüllt sein:
- Das erste Stützelement kann eine keilförmige, spitz zulaufende oder sich verjüngende Außenkontur aufweisen, die sich zwischen der ersten Fläche und der zweiten Fläche erstreckt.
- Das zweite Stützelement kann eine keilförmige, spitz zulaufende oder sich verjüngende Außenkontur aufweisen, die sich zwischen der zweiten Fläche und der ersten Fläche erstreckt.
- Das erste Stützelement kann einen prismatischen Körper mit einem trapezförmigen Querschnitt aufweisen, wobei die erste Fläche eine Grundseite (z. B. eine Basis) des trapezförmigen Querschnitts und die zweite Fläche eine der Grundseite entgegengesetzte weitere Grundseite des trapezförmigen Querschnitts ist.
- Das zweite Stützelement kann einen prismatischen Körper mit einem trapezförmigen Querschnitt aufweisen, wobei die erste Fläche eine Grundseite (z. B. eine Basis) des trapezförmigen Querschnitts und die zweite Fläche eine der Grundseite entgegengesetzte weitere Grundseite des trapezförmigen Querschnitts ist.
- Das erste Stützelement und das zweite Stützelement können zueinander derart angeordnet sein, dass sie einen prismatischen Gesamtkörper mit einem trapezförmigen, vorzugsweise einem parallelogrammförmigen, Querschnitt bilden.
- Die erste Fläche des ersten Stützelements kann planparallel zu (z. B. in einer Ebene mit) der ersten Fläche des zweiten Stützelements angeordnet sein. Die zweite Fläche des ersten Stützelements kann planparallel zu (z. B. in einer Ebene mit) der zweiten Fläche des zweiten Stützelements angeordnet sein. Es ist auch denkbar, dass das erste Stützelement einen prismatischen Grundkörper mit einem trapezförmigen Querschnitt aufweist und das zweite Stützelement einen prismatischen Grundkörper mit einem trapezförmigen Querschnitt aufweist, wobei das erste Stützelement und das zweite Stützelement derart (z. B. direkt) verbunden sind, dass die verbundenen Grundkörper einen prismatischen Körper mit einem trapezförmigen Querschnitt (z. B. einem parallelogrammförmigen Querschnitt) aufweisen.
- Das erste Stützelement und das zweite Stützelement können einen im Wesentlichen gleichen Keilwinkel aufweisen. Unter dem Keilwinkel kann bspw. ein Winkel verstanden werden, der durch gedachte Verlängerungen der Schenkel eines trapezförmigen Querschnitts eingeschlossen wird.
- Die erste Fläche des ersten Stützelements kann (z. B. mindestens zweifach oder mindestens dreifach oder mindestens vierfach) größer sein als die erste Fläche des zweiten Stützelements.
- Die zweite Fläche des ersten Stützelements kann (z. B. mindestens zweifach oder mindestens dreifach oder mindestens vierfach) kleiner sein als die zweite Fläche des zweiten Stützelements.
- Die erste Fläche des ersten Stützelements kann mindestens zweifach (z. B. mindestens dreifach oder mindestens vierfach) größer sein als die zweite Fläche des ersten Stützelements. Dies kann in einer Unfallsituation zu einer besonders großflächigen Aufnahme der von außen auf die Energiespeichervorrichtung wirkenden Kräfte durch das erste Stützelement führen.
- Die erste Fläche des zweiten Stützelements kann mindestens zweifach (z. B. mindestens dreifach oder mindestens vierfach) kleiner sein als die zweite Fläche des zweiten Stützelements. Dadurch können in einer Unfallsituation Swelling-Kräfte durch das zweite Stützelement besonders großflächig aufgenommen werden.
- Das erste Stützelement kann ein härteres Material und/oder eine geringere Verformbarkeit und/oder eine höhere Steifigkeit aufweisen als das zweite Stützelement.
- Das erste Stützelement kann ein metallisches Material umfassen und das zweite Stützelement kann ein Kunststoffmaterial umfassen.
- Die Energiespeichervorrichtung kann eine weitere Verteilerplatte (z. B. ein Lastverteilerblech) umfassen, die zwischen der zweiten Fläche des zweiten Stützelements und der weiteren Batteriezellenstapel-Endseite angeordnet ist.
- Das erste Stützelement kann eine Außenkontur aufweisen, die sich zwischen der ersten Fläche und der zweiten Fläche erstreckt. Das zweite Stützelement kann eine der Außenkontur gegenüberliegende, formkorrespondierende Außenkontur aufweisen, wobei die Außenkontur des ersten Stützelements und die Außenkontur des zweiten Stützelements mechanisch voneinander entkoppelt und/oder zueinander beabstandet sind.
- Das erste Stützelement und/oder das zweite Stützelement kann eine geringere Wärmeleitfähigkeit als das Batteriegehäuse aufweisen. Alternativ oder zusätzlich kann das erste Stützelement und/oder das zweite Stützelement den Batteriezellenstapel von dem Batteriegehäuse thermisch isolieren.
- Die zweite Fläche des ersten Stützelements kann nicht an der weiteren Batteriezellenstapel-Endseite abgestützt sein.
- Die zweite Fläche des zweiten Stützelement kann nicht an der Versteifungsstrebe abgestützt sein.
- Eine Höhe des ersten Stützelements kann sich über mindestens 50% einer Höhe der weiteren Batteriezellenstapel-Endseite erstrecken (z. B. über eine Gesamthöhe der weiteren Batteriezellenstapel-Endseite) oder über 50% einer Höhe des weiteren Endes der Versteifungsstrebe (z. B. über eine Gesamthöhe des Endes der Versteifungsstrebe) erstrecken.
- Eine Höhe des zweiten Stützelements kann sich über mindestens 50% einer Höhe der weiteren Batteriezellenstapel-Endseite erstrecken (z. B. über eine Gesamthöhe der weiteren Batteriezellenstapel-Endseite).
- Die weitere Stützvorrichtung kann ein drittes Stützelement aufweisen, das zwischen der Endseite des weiteren Batteriezellenstapels und dem Batteriegehäuse angeordnet ist. Das dritte Stützelement kann den weiteren Batteriezellenstapel am Batteriegehäuse abstützen, wobei sich ein Querschnitt des dritten Stützelements von der weiteren Batteriezellenstapel-Endseite hin zu dem Batteriegehäuse (z. B. keilförmig) verkleinern kann. Das dritte Stützelement kann eine erste Fläche und eine zweite Fläche aufweisen, wobei die erste Fläche an dem Batteriegehäuse abgestützt ist oder in diese übergeht, die zweite Fläche an der Endseite des weiteren Batteriezellenstapels abgestützt ist oder in diese übergeht, und die erste Fläche kleiner ist als die zweite Fläche.
- Das zweite Stützelement und das dritte Stützelement können einen Raum (z. B. einen prismatischen Raum mit einem trapezförmigen Querschnitt) aufspannen, in dem das erste Stützelement angeordnet ist.

Ein weiterer Aspekt betrifft ein Kraftfahrzeug aufweisend die Energiespeichervorrichtung wie hierin offenbart. Vorzugsweise ist das Kraftfahrzeug ein Nutzfahrzeug. Bei dem Nutzfahrzeug kann es sich mit anderen Worten um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Kraftfahrzeug um einen Lastkraftwagen, einen Omnibus und oder einen Sattelzug handeln, der zumindest teilweise elektrisch angetrieben ist.

Die zuvor beschriebenen bevorzugten Ausführungsformen und Merkmale der Erfindung sind beliebig miteinander kombinierbar.

Einzelheiten und Vorteile der Erfindung werden im Folgenden unter Bezug auf die beigefügte Zeichnung beschrieben. Es zeigen:

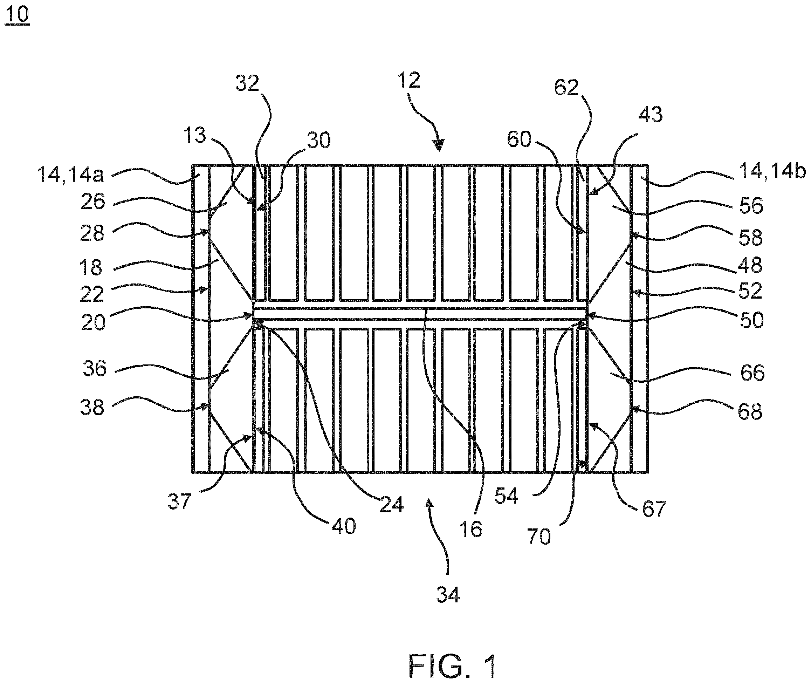

- Figur 1: eine Energiespeichervorrichtung gemäß einer Ausführungsform in der Draufsicht.

Figur 1 zeigt einen Abschnitt einer Energiespeichervorrichtung 10 für ein elektrisch angetriebenes Kraftfahrzeug (nicht dargestellt) gemäß einer Ausführungsform in der Draufsicht.

Die Energiespeichervorrichtung 10 weist einen Batteriezellenstapel 12, ein Batteriegehäuse 14, eine Versteifungsstrebe 16 und eine Stützvorrichtung auf.

Der Batteriezellenstapel 12 kann mehrere in Stapelrichtung S stapelartig hintereinander angeordnete Speicherzellen umfassen. Dabei kann es sich z. B. um Pouch-Speicherzellen oder prismatische Speicherzellen handeln.

Der Batteriezellenstapel 12 weist eine Batteriezellenstapel-Endseite 13 auf. Die Batteriezellenstapel-Endseite 13 kann in Stapelrichtung S gesehen z. B. an einer Stirnseite oder Stirnfläche des Batteriezellenstapels 12 angeordnet sein. Grundsätzlich ist aber auch denkbar, dass die Batteriezellenstapel-Endseite 13 an einer parallel zur Stapelrichtung S verlaufenden Seitenfläche des Batteriezellenstapels 12 angeordnet ist (hier nicht dargestellt). Es ist denkbar, dass zwischen einzelnen oder allen Speicherzellen ein Zwischenelement, bspw. ein Kompressionspad, angeordnet ist.

Das Batteriegehäuse 14 nimmt den Batteriezellenstapel 12 auf. Beispielsweise kann der Batteriezellenstapel 12 in das Batteriegehäuse 14 eingehängt sein. In Figur 1 sind lediglich ein linker Wandabschnitt 14a und ein rechter Wandabschnitt 14b des Batteriegehäuses 14 gezeigt. Bevorzugt kann das Batteriegehäuse 14 aber noch weitere Wandabschnitte aufweisen und den Batteriezellenstapel 12 so vollständig umgeben.

Die Versteifungsstrebe 16 verläuft durch das Batteriegehäuse 14. Beispielsweise kann die Versteifungsstrebe 16 parallel zu dem Batteriezellstapel 12 verlaufen (siehe Figur 1). Die Versteifungsstrebe 16 kann bspw. ein metallisches Material aufweisen.

Die Stützvorrichtung weist ein erstes Stützelement 18 und ein zweites Stützelement 26 auf.

Das erste Stützelement 18 ist zwischen einem Ende 20 der Versteifungsstrebe 16 und dem Batteriegehäuse 14 (in Figur 1: zwischen dem Ende 20 der Versteifungsstrebe 16 und dem linken Wandabschnitt 14a des Batteriegehäuses 14) angeordnet.

Das erste Stützelement 18 stützt die Versteifungsstrebe 16 an dem Batteriegehäuse 14 ab. Ein Querschnitt des ersten Stützelements 18 vergrößert sich von dem Ende 20 der Versteifungsstrebe 16 hin zu dem Batteriegehäuse 14. Der Querschnitt verläuft bevorzugt normal zur Stapelrichtung S durch das erste Stützelement 18.

Das erste Stützelement kann eine erste Fläche 22 und eine zweite Fläche 24 aufweisen.

Die erste Fläche 22 kann eine erste Querschnittsfläche sein, an der das erste Stützelement in das Batteriegehäuse 14 übergeht (nicht in Figur 1 dargestellt). Alternativ und bevorzugt dazu kann die erste Fläche 22 eine erste Anlagefläche sein, an der das erste Stützelement 18 an dem Batteriegehäuse 14 abgestützt ist, wie in Figur 1 dargestellt ist.

Die zweite Fläche 24 kann eine zweite Querschnittsfläche sein, an der das erste Stützelement 18 in das Ende 20 der Versteifungsstrebe 16 übergeht (nicht in Figur 1 dargestellt). Alternativ und bevorzugt dazu kann die zweite Fläche 24 eine zweite Anlagefläche sein, an der das erste Stützelement 18 an dem Ende 20 der Versteifungsstrebe 16 abgestützt ist, wie in Figur 1 dargestellt ist.

Das erste Stützelement 18 kann also einstückig-integral mit dem Batteriegehäuse 14 und der Versteifungsstrebe 16 verbunden sein. Alternativ und bevorzugt dazu kann das erste Stützelement 18 ein zu dem Batteriegehäuse 14 und der Versteifungsstrebe 16 separates Bauteil sein.

Die erste Fläche 22 kann an dem linken Wandabschnitt 14a des Batteriegehäuses 14 formschlüssig (bspw. mittels einer Nut-Feder-Verbindung) und/oder kraftschlüssig (bspw. mittels einer Verschraubung) befestigt sein. Die zweite Fläche 24 kann an dem Ende 20 der Versteifungsstrebe 16 formschlüssig (bspw. mittels einer Nut-Feder-Verbindung) und/oder kraftschlüssig (bspw. mittels einer Verschraubung) befestigt sein.

Die erste Fläche 22 des ersten Stützelements 18 kann größer sein als die zweite Fläche 24 des ersten Stützelements 18.

Die erste Fläche 22 kann größer sein als die zweite Fläche 24. Bevorzugt ist die erste Fläche 22 des ersten Stützelements 18 mindestens zweifach (z. B. mindestens dreifach oder mindestens vierfach) größer als die zweite Fläche 24 des ersten Stützelements 18. Denkbar ist, dass von außen im Crashfall auf die Energiespeichervorrichtung 10 einwirkende Kräfte großflächig durch die erste Fläche 22 aufgenommen werden und über die zweite Fläche 24 an die relativ schmale Versteifungsstrebe 16 geleitet werden.

Das erste Stützelement 18 kann eine keilförmige, spitz zulaufende oder sich verjüngende Außenkontur aufweisen. Die Außenkontur kann sich zwischen der ersten Fläche 22 und der zweiten Fläche 24 erstrecken. Denkbar ist, dass sich die keilförmige, spitz zulaufende oder sich verjüngende Außenkontur von der ersten Fläche 22 bis hin zur zweiten Fläche 24 erstreckt. Bevorzugt verläuft die Außenkontur eben. Weiter bevorzugt weist die Außenkontur keine Kerben und/oder Stufen auf.

Das erste Stützelement 18 kann einen prismatischen Körper mit einem trapezförmigen Querschnitt aufweisen. Die erste Fläche 22 kann eine Grundseite (z. B. eine Basis) des trapezförmigen Querschnitts sein. Die zweite Fläche 24 kann eine der Grundseite entgegengesetzte weitere Grundseite des trapezförmigen Querschnitts sein. Der trapezförmige Querschnitt kann gleichschenklig sein. Es ist aber auch denkbar, dass die Schenkel des trapezförmigen Querschnitts unterschiedliche Längen aufweisen.

Es ist möglich, dass sich eine Höhe des ersten Stützelements 18 über mindestens 50% einer Höhe der Batteriezellenstapel-Endseite 13 (z. B. über eine Gesamthöhe der Batteriezellenstapel-Endseite 13) erstreckt. Die Höhe des ersten Stützelements 18 kann sich auch über 50% einer Höhe des Endes 20 der Versteifungsstrebe 16 (z. B. über eine Gesamthöhe des Endes 20 der Versteifungsstrebe 16) erstrecken. Denkbar ist zusätzlich, dass sich die Höhe des ersten Stützelements 18 über die Batteriezellenstapel-Endseite 13 hinaus erstreckt.

Das zweite Stützelement 26 ist zwischen einer Batteriezellenstapel-Endseite 13 und dem Batteriegehäuse 14 angeordnet.

Das zweite Stützelement 26 stützt den Batteriezellenstapel 12 am Batteriegehäuse 14 ab. Ein Querschnitt des zweiten Stützelements 26 vergrößert sich von der Batteriezellenstapel-Endseite 13 hin zu dem Batteriegehäuse 14. Der Querschnitt verläuft bevorzugt normal zur Stapelrichtung S durch das zweite Stützelement 26.

Die erste Fläche 28 kann eine erste Querschnittsfläche sein, an der das zweite Stützelement 26 in das Batteriegehäuse 14 übergeht (nicht in Figur 1 dargestellt). Alternativ und bevorzugt dazu kann die erste Fläche 28 eine erste Anlagefläche sein, an der das zweite Stützelement 26 an dem Batteriegehäuse 14 abgestützt ist, wie in Figur 1 dargestellt ist.

Das zweite Stützelement 26 kann eine erste Fläche 28 und eine zweite Fläche 30 aufweisen.

Die zweite Fläche 30 kann eine zweite Querschnittsfläche sein, an der das zweite Stützelement 26 in die Batteriezellenstapel-Endseite 13 übergeht (nicht in Figur 1 dargestellt). Alternativ und bevorzugt dazu kann die zweite Fläche 30 eine zweite Anlagefläche sein, an der das zweite Stützelement 26 an der Batteriezellenstapel-Endseite 13 abgestützt ist, wie in Figur 1 dargestellt ist.

Das zweite Stützelement 26 kann also einstückig integral mit dem Batteriegehäuse 14 und der Batteriezellenstapel-Endseite 13 verbunden sein. Alternativ dazu kann das zweite Stützelement 26 ein zu dem Batteriegehäuse 14 und der Batteriezellenstapel-Endseite 13 separates Bauteil sein.

Die erste Fläche 28 des zweiten Stützelements 26 kann kleiner sein als die zweite Fläche 30 des zweiten Stützelements 26.

Die erste Fläche 28 kann an dem linken Wandabschnitt 14a des Batteriegehäuses 14 formschlüssig (bspw. mittels einer Nut-Feder-Verbindung) und/oder kraftschlüssig (bspw. mittels einer Verschraubung) befestigt sein. Die zweite Fläche 30 kann an der Batteriezellenstapel-Endseite 13 formschlüssig (bspw. mittels einer Nut-Feder-Verbindung) und/oder kraftschlüssig (bspw. mittels einer Verschraubung) befestigt sein.

Bevorzugt ist die zweite Fläche 30 des zweiten Stützelements 26 mindestens zweifach (z. B. mindestens dreifach oder mindestens vierfach) größer als die erste Fläche 28 des zweiten Stützelements 26.

Das zweite Stützelement 26 kann eine keilförmige, spitz zulaufende oder sich verjüngende Außenkontur aufweisen. Die Außenkontur kann sich zwischen der zweiten Fläche 30 und der ersten Fläche 28 erstrecken. Denkbar ist, dass sich die keilförmige, spitz zulaufende oder sich verjüngende Außenkontur von der zweiten Fläche 30 bis hin zur zweiten Fläche 28 erstreckt. Bevorzugt verläuft die Außenkontur eben. Weiter bevorzugt weist die Außenkontur keine Kerben und/oder Stufen auf.

Das zweite Stützelement 26 kann einen prismatischen Körper mit einem trapezförmigen Querschnitt aufweisen. Die erste Fläche 28 kann eine Grundseite (z. B. eine Basis) des trapezförmigen Querschnitts sein. Ferner kann die zweite Fläche 30 eine der Grundseite entgegengesetzte weitere Grundseite des trapezförmigen Querschnitts sein.

Ferner kann sich eine Höhe des zweiten Stützelements 26 über mindestens 50% einer Höhe der Batteriezellenstapel-Endseite 13 (z. B. über eine Gesamthöhe der Batteriezellenstapel-Endseite 13) erstrecken. Denkbar ist zusätzlich, dass sich die Höhe des zweiten Stützelements 26 über die Batteriezellenstapel-Endseite 13 hinaus erstreckt.

Die erste Fläche 22 des ersten Stützelements 18 kann größer sein als die erste Fläche 28 des zweiten Stützelements 26. Denkbar ist bspw. dass das erste Stützelements 18 an einer z. B. mindestens zweifach oder mindestens dreifach oder mindestens vierfach größeren Fläche am Batteriegehäuse 14 (in Figur 1: linker Wandabschnitt 14a des Batteriegehäuses 14) abgestützt ist als das zweite Stützelement 26.

Ferner ist denkbar, dass zweite Fläche 30 des zweiten Stützelements 26 (z. B. mindestens zweifach oder mindestens dreifach oder mindestens vierfach) größer ist als die zweite Fläche 24 des ersten Stützelements 18.

Die erste Fläche 22 des ersten Stützelements 18 kann planparallel zu (z. B. in einer Ebene mit) der ersten Fläche 28 des zweiten Stützelements 26 angeordnet sein. Die zweite Fläche 24 des ersten Stützelements 18 kann planparallel zu (z. B. in einer Ebene mit) der zweiten Fläche 30 des zweiten Stützelements 26 angeordnet sein.

Es ist auch denkbar, dass das erste Stützelement 18 einen prismatischen Grundkörper mit einem trapezförmigen Querschnitt aufweist und das zweite Stützelement 26 einen prismatischen Grundkörper mit einem trapezförmigen Querschnitt aufweist. Das erste Stützelement 18 und das zweite Stützelement 26 können derart (z. B. direkt) verbunden sein, dass die verbundenen Grundkörper einen prismatischen Körper mit einem trapezförmigen Querschnitt (z. B. einem parallelogrammförmigen Querschnitt) aufweisen.

Der trapezförmige Querschnitt kann gleichschenklig sein. Es ist aber auch denkbar, dass die Schenkel des trapezförmigen Querschnitts unterschiedliche Längen aufweisen.

Ferner können das erste Stützelement 18 und das zweite Stützelement 26 einen im Wesentlichen gleichen Keilwinkel aufweisen.

Das erste Stützelement 18 kann ein härteres Material und/oder eine geringere Verformbarkeit und/oder eine höhere Steifigkeit (z. B. aufgrund der Formgebung und/oder aufgrund seines Materials) aufweisen als das zweite Stützelement 26.

Beispielsweise kann das erste Stützelement 18 ein metallisches Material (z. B. Aluminium oder Stahl) umfassen. Das zweite Stützelement 26 kann ein Kunststoffmaterial (z. B. ein Schaummaterial) umfassen.

Es ist denkbar, dass das erste Stützelement 18 eine Außenkontur aufweist, die sich zwischen der ersten Fläche 22 und der zweiten Fläche 24 erstreckt. Ferner kann das zweite Stützelement 26 eine der Außenkontur gegenüberliegende, formkorrespondierende Außenkontur aufweisen. Die Außenkontur des ersten Stützelements 18 und die Außenkontur des zweiten Stützelements 26 können mechanisch voneinander entkoppelt und/oder zueinander beabstandet sein. Denkbar ist bspw. dass die Energiespeichervorrichtung 10 zwischen der Außenkontur des ersten Stützelements 18 und der Außenkontur des zweiten Stützelements 26 einen Luftspalt aufweist.

Das erste Stützelement 18 und/oder das zweite Stützelement 26 kann eine geringere Wärmeleitfähigkeit (z. B. einen niedrigeren Wärmeleitkoeffizienten) aufweisen als das Batteriegehäuse 14. Das erste Stützelement 18 und/oder das zweite Stützelement 26 kann den Batteriezellenstapel 12 von dem Batteriegehäuse 14 thermisch isolieren. In anderen Worten kann das erste Stützelement 18 und/oder das zweite Stützelement 26 eine wärmedämmende Eigenschaft aufweisen. Diese kann sich aufgrund seines Materials und/oder seiner Formgebung einstellen. Beispielhaft kann das erste Stützelement 18 und/oder das zweite Stützelement 26 ein Schaummaterial umfassen.

Es ist denkbar, dass die zweite Fläche 24 des ersten Stützelements 18 nicht an der Batteriezellenstapel-Endseite 13 abgestützt ist. Optional ist die zweite Fläche 30 des zweiten Stützelements 26 nicht an der Versteifungsstrebe 16 abgestützt. Beispielsweise kann das erste Stützelement 18 beabstandet zu der Batteriezellenstapel-Endseite 13 und/oder das zweite Stützelement 26 beabstandet zu der Versteifungsstrebe 16 angeordnet sein.

Die Energiespeichervorrichtung 10 kann eine Verteilerplatte 32 aufweisen. Die Verteilerplatte 32 kann bspw. einen metallischen Werkstoff aufweisen. Z. B. ist die Verteilerplatte 32 ein Lastverteilerblech. Die Verteilerplatte 32 kann zwischen der zweiten Fläche 30 des zweiten Stützelements 26 und der Batteriezellenstapel-Endseite 13 angeordnet sein.

Es ist denkbar, dass die Energiespeichervorrichtung 10 (mindestens) einen weiteren Batteriezellenstapel 34 aufweist. Der weitere Batteriezellenstapel 34 kann in dem Batteriegehäuse 14 aufgenommen und benachbart (z. B. parallel) zu dem Batteriezellenstapel 12 angeordnet sein. Die Versteifungsstrebe 16 kann zwischen dem Batteriezellenstapel 12 und dem weiteren Batteriezellenstapel 34 angeordnet sein. In anderen Worten können der Batteriezellenstapel 12 und der weitere Batteriezellenstapel 34 durch die Versteifungsstrebe 16 voneinander getrennt sein.

Optional kann die Stützvorrichtung ein drittes Stützelement 36 aufweisen. Das dritte Stützelement 36 kann zwischen einer Batteriezellenstapel-Endseite 37 des weiteren Batteriezellenstapels 34 und dem Batteriegehäuse 14 angeordnet sein. Das dritte Stützelement 36 kann den weiteren Batteriezellenstapel (34) am Batteriegehäuse (14) abstützen, wobei sich ein Querschnitt des dritten Stützelements (36) von der Batteriezellenstapel-Endseite (37) hin zu dem Batteriegehäuse (14) verkleinern kann.

Das dritte Stützelement 36 kann eine erste Fläche 38 und eine zweite Fläche 40 aufweisen.

Die erste Fläche 38 kann eine erste Querschnittsfläche sein, an der das dritte Stützelement 36 in das Batteriegehäuse 14 übergeht (nicht in Figur 1 dargestellt). Alternativ und bevorzugt kann die erste Fläche 38 eine erste Anlagefläche sein, an der das dritte Stützelement 36 an dem Batteriegehäuse 14 abgestützt ist, wie in Figur 1 dargestellt ist. Die zweite Fläche 40 kann eine zweite Querschnittsfläche sein, an der das dritte Stützelement 36 in die Batteriezellenstapel-Endseite 37 übergeht (nicht in Figur 1 dargestellt). Alternativ und bevorzugt kann die zweite Fläche 40 eine zweite Anlagefläche sein, an der das dritte Stützelement 36 an der Batteriezellenstapel-Endseite 37 abgestützt ist, wie in Figur 1 dargestellt ist.

Auch das dritte Stützelement 36 kann also einstückig integral mit dem Batteriegehäuse 14 und der Batteriezellenstapel-Endseite 37 verbunden sein. Alternativ und bevorzugt dazu kann das dritte Stützelement 36 ein zu dem Batteriegehäuse 14 und der Batteriezellenstapel-Endseite 37 separates Bauteil sein.

Es ist denkbar, dass die erste Fläche 38 an dem Batteriegehäuse 14 abgestützt ist. Die zweite Fläche 40 kann an der Batteriezellenstapel-Endseite 37 des weiteren Batteriezellenstapels 34 abgestützt sein. Ferner kann die erste Fläche 38 kleiner sein als die zweite Fläche 40.

Das zweite Stützelement 26 und das dritte Stützelement 36 können einen Raum (z. B. einen prismatischen Raum mit einem trapezförmigen Querschnitt) aufspannen, in dem das erste Stützelement 18 angeordnet ist. Denkbar ist bspw., dass der aufgespannte Raum einer Außenkontur des ersten Stützelements 18 entspricht bzw. folgt.

Optional weist die Energiespeichervorrichtung 10 eine weitere Stützvorrichtung auf.

Die weitere Stützvorrichtung kann ein erstes Stützelement 48 und ein zweites Stützelement 56 aufweisen.

Das erste Stützelement 48 kann zwischen einem dem Ende 20 entgegengesetzten weiteren Ende 50 der Versteifungsstrebe 16 und dem Batteriegehäuse 14 (in Figur 1: zwischen dem Ende 50 der Versteifungsstrebe 16 und dem rechten Wandabschnitt 14b des Batteriegehäuses 14) angeordnet sein.

Das erste Stützelement 48 kann eine erste Fläche 52 und eine zweite Fläche 54 aufweisen. Die erste Fläche 52 kann eine erste Querschnittsfläche sein, an der das erste Stützelement 48 in das Batteriegehäuse 14 übergeht (nicht in Figur 1 dargestellt). Alternativ und bevorzugt kann die erste Fläche 52 eine erste Anlagefläche sein, an der das erste Stützelement 48 an dem Batteriegehäuse 14 abgestützt ist, wie in Figur 1 dargestellt ist. Die zweite Fläche 54 kann eine zweite Querschnittsfläche sein, an der das erste Stützelement 48 in das Ende 50 der Versteifungsstrebe 16 übergeht (nicht in Figur 1 dargestellt). Alternativ und bevorzugt kann die zweite Fläche 54 eine zweite Anlagefläche sein, an der das erste Stützelement 48 an dem Ende 50 der Versteifungsstrebe 16 abgestützt ist, wie in Figur 1 dargestellt ist.

Das erste Stützelement 48 kann die Versteifungsstrebe 16 an dem Batteriegehäuse 14 abstützten. Ein Querschnitt des ersten Stützelements 48 kann sich von dem weiteren Ende 50 der Versteifungsstrebe 16 hin zu dem Batteriegehäuse 14 vergrößern.

Die erste Fläche 52 kann an dem Batteriegehäuse 14 abgestützt sein. Die zweite Fläche 54 kann an dem weiteren Ende 50 der Versteifungsstrebe 16 abgestützt sein. Die erste Fläche 52 kann größer sein als die zweite Fläche 54.

Das zweite Stützelement 56 kann zwischen einer weiteren Batteriezellenstapel-Endseite 43 und dem Batteriegehäuse 14 angeordnet sein (in Figur 1: zwischen der weiteren Batteriezellenstapel-Endseite 43 und dem rechten Wandabschnitt 14b des Batteriegehäuses 14). Das zweite Stützelement 56 kann eine erste Fläche 58 und eine zweite Fläche 60 aufweisen.

Das zweite Stützelement 56 kann den Batteriezellenstapel 12 an dem Batteriegehäuse 14 abstützen. Ein Querschnitt des zweiten Stützelements 56 kann sich von der Batteriezellenstapel-Endseite 43 hin zu dem Batteriegehäuse 14 verkleinern.

Das zweite Stützelement 56 kann eine erste Fläche 58 und eine zweite Fläche 60 aufweisen. Die erste Fläche 58 kann eine erste Querschnittsfläche sein, an der das zweite Stützelement 56 in das Batteriegehäuse 14 übergeht (nicht in Figur 1 dargestellt). Alternativ und bevorzugt dazu kann die erste Fläche 58 eine erste Anlagefläche sein, an der das zweite Stützelement 56 an dem Batteriegehäuse 14 abgestützt ist, wie in Figur 1 dargestellt ist. Die zweite Fläche 60 kann eine erste Querschnittsfläche sein, an der das zweite Stützelement 56 in die weitere Batteriezellenstapel-Endseite 43 übergeht (nicht in Figur 1 dargestellt). Alternativ kann die zweite Fläche 60 eine zweite Anlagefläche sein, an der das zweite Stützelement 56 an der weiteren Batteriezellenstapel-Endseite 43 abgestützt ist, wie in Figur 1 dargestellt ist.

Die erste Fläche 58 kann an dem Batteriegehäuse 14 abgestützt sein. Die zweite Fläche 60 kann an der weiteren Batteriezellenstapel-Endseite 43 abgestützt sein. Die erste Fläche 58 kann kleiner sein als die zweite Fläche 60.

Das erste Stützelement 48 der weiteren Stützvorrichtung kann analog zum ersten Stützelement 18 der Stützvorrichtung ausgeführt sein (z. B. die gleichen Merkmale aufweisen wie das erste Stützelement 18 der Stützvorrichtung). Insbesondere kann das erste Stützelement 48 spiegelsymmetrisch zum ersten Stützelement 18 angeordnet sein.

Das zweite Stützelement 56 der weiteren Stützvorrichtung kann analog zum zweiten Stützelement 26 der Stützvorrichtung ausgeführt sein (z. B. die gleichen Merkmale aufweisen wie das erste Stützelement 26 der Stützvorrichtung). Insbesondere kann das zweite Stützelement 56 spiegelsymmetrisch zum zweiten Stützelement 56 angeordnet sein.

Optional weist die weitere Stützvorrichtung ein drittes Stützelement 66 auf, das analog zum dritten Stützelement 36 der Stützvorrichtung ausgeführt sein kann. Insbesondere kann das dritte Stützelement 66 spiegelsymmetrisch zum dritten Stützelement 36 angeordnet sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Energiespeichervorrichtung
- 12: Batteriezellenstapel
- 13: Batteriezellenstapel-Endseite
- 14: Batteriegehäuse
- 14a: linker Wandabschnitt des Batteriegehäuses
- 14b: rechter Wandabschnitt des Batteriegehäuses
- 16: Versteifungsstrebe
- 18: erstes Stützelement
- 20: Ende der Versteifungsstrebe
- 22: erste Fläche des ersten Stützelements
- 24: zweite Fläche des ersten Stützelements
- 26: zweites Stützelement
- 28: erste Fläche des zweiten Stützelements
- 30: zweite Fläche des zweiten Stützelements
- 32: Verteilerplatte
- 34: weiterer Batteriezellenstapel
- 36: drittes Stützelement
- 38: erste Fläche des dritten Stützelements
- 40: zweite Fläche des dritten Stützelements
- 48: erstes Stützelement
- 50: weiteres Ende der Versteifungsstrebe
- 52: erste Fläche des ersten Stützelements
- 54: zweite Fläche des ersten Stützelements
- 56: zweites Stützelement
- 58: erste Fläche des zweiten Stützelements
- 60: zweite Fläche des zweiten Stützelements
- 62: weitere Verteilerplatte
- 66: drittes Stützelement
- 67: weitere Endseite des weiteren Batteriezellenstapels
- 68: erste Fläche des dritten Stützelements
- 70: zweite Fläche des dritten Stützelements

## Patentansprüche

1. Energiespeichervorrichtung (10) für ein elektrisch angetriebenes Kraftfahrzeug, aufweisend:
einen Batteriezellenstapel (12);
ein Batteriegehäuse (14), das den Batteriezellenstapel (12) aufnimmt;
eine Versteifungsstrebe (16), die durch das Batteriegehäuse (14) verläuft, vorzugsweise parallel zu dem Batteriezellstapel (12); und
eine Stützvorrichtung, aufweisend:
- ein erstes Stützelement (18), das zwischen einem Ende (20) der Versteifungsstrebe (16) und dem Batteriegehäuse (14) angeordnet ist und die Versteifungsstrebe (16) an dem Batteriegehäuse (14) abstützt, wobei sich ein Querschnitt des ersten Stützelements (18) von dem Ende (20) der Versteifungsstrebe (16) hin zu dem Batteriegehäuse (14) vergrößert; und
- ein zweites Stützelement (26), das zwischen einer Batteriezellenstapel-Endseite (13) und dem Batteriegehäuse (14) angeordnet ist und den Batteriezellenstapel (12) am Batteriegehäuse (14) abstützt, wobei sich ein Querschnitt des zweiten Stützelements (26) von der Batteriezellenstapel-Endseite (13) hin zu dem Batteriegehäuse (14) verkleinert.

2. Energiespeichervorrichtung (10) nach Anspruch 1, wobei
das erste Stützelement (18) eine erste Fläche (22) und eine zweite Fläche (24) aufweist, wobei:
- die erste Fläche (22) eine erste Querschnittsfläche, an der das erste Stützelement (18) in das Batteriegehäuse (14) übergeht, oder eine erste Anlagefläche, an der das erste Stützelement (18) an dem Batteriegehäuse (14) abgestützt ist, ist; und
- die zweite Fläche (24) eine zweite Querschnittsfläche, an der das erste Stützelement (18) in das Ende (20) der Versteifungsstrebe (16) übergeht, oder eine zweite Anlagefläche, an der das erste Stützelement (18) an dem Ende (20) der Versteifungsstrebe (16) abgestützt ist, ist;
und
das zweite Stützelement (26) eine erste Fläche (28) und eine zweite Fläche (30) aufweist, wobei:
- die erste Fläche (28) eine erste Querschnittsfläche, an der das zweite Stützelement (26) in das Batteriegehäuse (14) übergeht, oder eine erste Anlagefläche, an der das zweite Stützelement (26) an dem Batteriegehäuse (14) abgestützt ist, ist; und
- die zweite Fläche (30) eine zweite Querschnittsfläche, an der das zweite Stützelement (26) in die Batteriezellenstapel-Endseite (13) übergeht, oder eine zweite Anlagefläche, an der das zweite Stützelement (26) an der Batteriezellenstapel-Endseite (13) abgestützt ist, ist.

3. Energiespeichervorrichtung (10) nach Anspruch 2, wobei
die erste Fläche (22) des ersten Stützelements (18) größer ist als die zweite Fläche (24) des ersten Stützelements (18); und
die erste Fläche (28) des zweiten Stützelements (26) kleiner ist als die zweite Fläche (30) des zweiten Stützelements (26).

4. Energiespeichervorrichtung (10) nach einem der Ansprüche 2 oder 3, wobei
das erste Stützelement (18) eine keilförmige, spitz zulaufende oder sich verjüngende Außenkontur aufweist, die sich zwischen der ersten Fläche (22) und der zweiten Fläche (24) erstreckt; und/oder
das zweite Stützelement (26) eine keilförmige, spitz zulaufende oder sich verjüngende Außenkontur aufweist, die sich zwischen der zweiten Fläche (30) und der ersten Fläche (28) erstreckt.

5. Energiespeichervorrichtung (10) nach einem der Ansprüche 2 bis 4, wobei
das erste Stützelement (18) einen prismatischen Körper mit trapezförmigem Querschnitt aufweist, wobei die erste Fläche (22) eine Grundseite, vorzugsweise eine Basis, des trapezförmigen Querschnitts und die zweite Fläche (24) eine der Grundseite entgegengesetzte weitere Grundseite des trapezförmigen Querschnitts ist; und/oder
das zweite Stützelement (26) einen prismatischen Körper mit einem trapezförmigen Querschnitt aufweist, wobei die erste Fläche (28) eine Grundseite, vorzugsweise eine Basis, des trapezförmigen Querschnitts und die zweite Fläche (30) eine der Grundseite entgegengesetzte weitere Grundseite des trapezförmigen Querschnitts ist.

6. Energiespeichervorrichtung (10) nach einem nach einem der Ansprüche 2 bis 5, wobei
die erste Fläche (22) des ersten Stützelements (18) planparallel zu, vorzugsweise in einer Ebene mit, der ersten Fläche (28) des zweiten Stützelements (26) angeordnet ist und/oder die zweite Fläche (24) des ersten Stützelements (18) planparallel zu, vorzugsweise in einer Ebene mit, der zweiten Fläche (30) des zweiten Stützelements (26) angeordnet ist; und/oder
das erste Stützelement (18) und das zweite Stützelement (26) einen im Wesentlichen gleichen Keilwinkel aufweisen.

7. Energiespeichervorrichtung (10) nach einem der Ansprüche 2 bis 6, wobei
die erste Fläche (22) des ersten Stützelements (18), vorzugsweise mindestens zweifach oder mindestens dreifach oder mindestens vierfach, größer ist als die erste Fläche (28) des zweiten Stützelements (26); und/oder
die zweite Fläche (30) des zweiten Stützelements (26), vorzugsweise mindestens zweifach oder mindestens dreifach oder mindestens vierfach, größer ist als die zweite Fläche (24) des ersten Stützelements (18); und/oder
die erste Fläche (22) des ersten Stützelements (18) mindestens zweifach, vorzugsweise mindestens dreifach oder mindestens vierfach, größer ist als die zweite Fläche (24) des ersten Stützelements (18); und/oder
die zweite Fläche (30) des zweiten Stützelements (26) mindestens zweifach, vorzugsweise mindestens dreifach oder mindestens vierfach, größer ist als die erste Fläche (28) des zweiten Stützelements (26).

8. Energiespeichervorrichtung (10) nach einem der Ansprüche 2 bis 7, wobei das erste Stützelement (18) eine Außenkontur aufweist, die sich zwischen der ersten Fläche (22) und der zweiten Fläche (24) erstreckt, und das zweite Stützelement (26) eine der Außenkontur gegenüberliegende, formkorrespondierende Außenkontur aufweist, wobei die Außenkontur des ersten Stützelements (18) und die Außenkontur des zweiten Stützelements (26) mechanisch voneinander entkoppelt und/oder zueinander beabstandet sind.

9. Energiespeichervorrichtung (10) nach einem der Ansprüche 2 bis 8, wobei
die zweite Fläche (24) des ersten Stützelements (18) nicht an der Batteriezellenstapel-Endseite (13) abgestützt ist; und/oder
die zweite Fläche (30) des zweiten Stützelements (26) nicht an der Versteifungsstrebe (16) abgestützt ist.

10. Energiespeichervorrichtung (10) nach einem der vorherigen Ansprüche, wobei das erste Stützelement (18) einstückig integral mit dem Batteriegehäuse (14) und/oder der Versteifungsstrebe (16) verbunden ist oder ein zu dem Batteriegehäuse (14) und der Versteifungsstrebe (16) separates Bauteil ist.

11. Energiespeichervorrichtung (10) nach einem der vorhergehenden Ansprüche, wobei
das erste Stützelement (18) ein härteres Material und/oder eine geringere Verformbarkeit und/oder eine höhere Steifigkeit aufweist als das zweite Stützelement (26); und/oder
das erste Stützelement (18) ein metallisches Material umfasst und das zweite Stützelement (26) ein Kunststoffmaterial umfasst.

12. Energiespeichervorrichtung (10) nach einem der vorhergehenden Ansprüche, wobei das erste Stützelement (18) und/oder das zweite Stützelement (26)
eine geringere Wärmeleitfähigkeit aufweist als das Batteriegehäuse (14); und/oder den Batteriezellenstapel (12) von dem Batteriegehäuse (14) thermisch isoliert.

13. Energiespeichervorrichtung (10) nach einem der vorhergehenden Ansprüche, wobei:
sich eine Höhe des ersten Stützelements (18) über mindestens 50% einer Höhe der Batteriezellenstapel-Endseite (13), vorzugsweise über eine Gesamthöhe der Batteriezellenstapel-Endseite (13), oder über 50% einer Höhe des Endes (20) der Versteifungsstrebe (16), vorzugsweise über eine Gesamthöhe des Endes (20) der Versteifungsstrebe (16), erstreckt; und/oder
sich eine Höhe des zweiten Stützelements (26) über mindestens 50% einer Höhe der Batteriezellenstapel-Endseite (13), vorzugsweise über eine Gesamthöhe der Batteriezellenstapel-Endseite (13), erstreckt.

14. Energiespeichervorrichtung (10) nach einem der vorhergehenden Ansprüche, ferner aufweisend
einen weiteren Batteriezellenstapel (34), der in dem Batteriegehäuse (14) aufgenommen und benachbart, und vorzugsweise parallel, zu dem Batteriezellenstapel (12) angeordnet ist, wobei die Versteifungsstrebe (16) zwischen dem Batteriezellenstapel (12) und dem weiteren Batteriezellenstapel (34) angeordnet ist,
wobei die Stützvorrichtung ein drittes Stützelement (36) aufweist, das zwischen einer Batteriezellenstapel-Endseite (37) des weiteren Batteriezellenstapels (34) und dem Batteriegehäuse (14) angeordnet ist und den weiteren Batteriezellenstapel (34) am Batteriegehäuse (14) abstützt, wobei sich ein Querschnitt des dritten Stützelements (36) von der Batteriezellenstapel-Endseite (37) hin zu dem Batteriegehäuse (14) verkleinert;
wobei vorzugsweise das zweite Stützelement (26) und das dritte Stützelement (36) einen Raum, vorzugsweise einen prismatischen Raum mit einem trapezförmigen Querschnitt, aufspannen, in dem das erste Stützelement (18) angeordnet ist.

15. Energiespeichervorrichtung (10) nach einem der vorhergehenden Ansprüche, aufweisend eine weitere Stützvorrichtung, wobei die weitere Stützvorrichtung aufweist:
- ein erstes Stützelement (48), das zwischen einem dem Ende (20) entgegengesetzten weiteren Ende (50) der Versteifungsstrebe (16) und dem Batteriegehäuse (14) angeordnet ist und die Versteifungsstrebe (16) an dem Batteriegehäuse (14) abstützt, wobei sich ein Querschnitt des ersten Stützelements (48) von dem weiteren Ende (50) der Versteifungsstrebe (16) hin zu dem Batteriegehäuse (14) vergrößert; und
- ein zweites Stützelement (56), das zwischen einer weiteren Batteriezellenstapel-Endseite (43) und dem Batteriegehäuse (14) angeordnet ist und den Batteriezellenstapel (12) an dem Batteriegehäuse (14) abstützt, wobei sich ein Querschnitt des zweiten Stützelements (56) von der weiteren Batteriezellenstapel-Endseite (43) hin zu dem Batteriegehäuse (14) verkleinert.
